# EUROPÄISCHE PATENTSCHRIFT

(11) **EP 1 611 759 B1**
(45) Veröffentlichungstag und Bekanntmachung des Hinweises auf die Patenterteilung: **05.03.2008**
(21) Anmeldenummer: 04714760.8
(22) Anmeldetag: 26.02.2004
(51) Int. Cl.: H04Q 7/38

(54) **Verfahren zur Datenübertragung in einem Funkkommunikationssystem**
Method for transmitting data in a radio communication network
Procédé de transmission de données dans un système de communication radio

(30) Priorität: 07.04.2003 DE 10315767
(43) Veröffentlichungstag der Anmeldung: 04.01.2006
(73) Patentinhaber: Nokia Siemens Networks GmbH & Co. KG, 81541 München (DE)
(72) Erfinder: FREY, Andreas, 73312 Geislingen (DE); MAYER, Jürgen, 89134 Blaustein (DE); NEMETHOVA, Olivia, 851 04 Bratislava (SK); WEHMEIER, Lars, 10115 Berlin (DE)
(86) Internationale Anmeldenummer: PCT/EP2004/001935
(87) Internationale Veröffentlichungsnummer: WO 2004/091225

(56) Entgegenhaltungen:
- EP-A- 1 069 790
- WO-A-02/01897
- WO-A-03/088702
- US-A1- 2002 160 781
- US-B1- 6 519 461

## Beschreibung

In Funkkommunikationssystemen werden Informationen, z.B. Sprache, Bildinformation oder Daten, mit Hilfe von elektromagnetischen Wellen über eine Funkschnittstelle zwischen einer Basisstation und einer Teilnehmerstation, z.B. einer Mobilstation, übertragen. Das Abstrahlen der elektromagnetischen Wellen erfolgt dabei mit Trägerfrequenzen, die in dem für das jeweilige System vorgesehenen Frequenzband liegen. Für künftige Mobilfunksysteme wird die Funkschnittstelle entsprechend TD/CDMA-Zugriffsverfahren bzw. FD/CDMA-Zugriffsverfahren in Übertragungskanäle unterteilt, die die Funkressourcen der Funkschnittstelle für die einzelnen Teilnehmerstationen separieren. Für UMTS (Universal Mobile Telecommunications System) oder andere Systeme der 3. Generation sind für die Übertragungskanäle beispielsweise Frequenzen im Frequenzband von ca. 2000 MHz vorgesehen.

Im UMTS System wird eine Verbindung zwischen einer Basisstation, die auch als Node B bezeichnet wird, und einer Teilnehmerstation aufgebaut. Der Basisstation ist dabei eine steuernde Funknetzsteuerung zugeordnet, die die Funkressourcen der Basisstation verwaltet und über die eine Verbindung zu einem Kernnetz hergestellt wird. In der Fachwelt wird die steuernde Funknetzsteuerung vielfach als Controlling Radio Network Controller oder CRNC bezeichnet. Der Teilnehmerstation ist im UMTS System eine dienende Funknetzsteuerung zugeordnet, die vielfach als Serving Radio Network Controller oder SRNC bezeichnet wird. Diese dienende Funknetzsteuerung ist in der Regel diejenige Funknetzsteuerung, über die die Verbindung zur Teilnehmerstation erstmals aufgebaut wurde, bleibt der Teilnehmerstation zugeordnet, auch wenn die Teilnehmerstation sich in den Bereich einer anderen Funknetzsteuerung bewegt. Die dienende Funknetzsteuerung ist für die Konfiguration der Teilnehmerstation verantwortlich. Dazu sendet die Teilnehmerstation während der gesamten Verbindung dedizierte Messprotokolle an die dienende Funknetzsteuerung. Diese Messprotokolle werden transparent für die steuernde Funknetzsteuerung und die Basisstation übertragen.

Im UMTS System und anderen Systemen der 3. Generation ist ein gemeinsamer Kanal vorgesehen, der als Shared Channel bezeichnet wird, der gleichzeitig mehreren Teilnehmern für eine Datenübertragung zwischen einer Basisstation und einer Teilnehmerstation zugewiesen werden kann. Die Anforderungen der einzelnen Teilnehmer werden dabei in einer Warteschlange in der Basisstation verwaltet. Die Ressourcenzuteilung für den gemeinsamen Kanal erfolgt jedoch in der steuernden Funknetzsteuerung, die der Basisstation zugeordnet ist.

In vielen Mobilfunksystemen, insbesondere der 3. Mobilfunkgeneration, werden verschiedene Dienste zur Datenübertragung angeboten, denen unterschiedliche Dienstgüteparameter, auch Quality of Services genannt, zugeordnet sind. Das können beispielsweise zugesagte Übertragungsraten oder zugesagte Verzögerungszeiten sein. Dienste, denen dieselben Dienstgüteparameter zugeordnet sind, werden einer Dienstgüteklasse zugeordnet.

Kommt es zu einer Überlastung des gemeinsamen Kanals, so können die Dienstgüteparameter für die einzelnen Dienste nicht mehr eingehalten werden. Es ist daher vorgeschlagen worden, dass die Basisstation der steuernden Funknetzsteuerung mitteilt, wenn festgestellt wird, dass einzelne Dienstgüteklassen nicht mehr die angeforderten und zugesagten Dienstgüteparameter erreichen können. Die Mitteilung erfolgt in einem sogenannten Common measurement. In diesem Fall weist die steuernde Funknetzsteuerung der Basisstation für den gemeinsamen Kanal zusätzliche Ressourcen zu. Dabei wird nicht berücksichtigt, wie die Funkbedingungen für einzelne Teilnehmerstationen aussehen. Es sind Situationen denkbar, bei denen die Dienstgüteanforderungen durch Ressourcenzuweisung nur ungenügend erfüllt werden, weil die Funkbedingungen für einzelne Teilnehmerstationen sehr schlecht sind.

Aus der US 2002/0160781 A1 ist ein Verfahren bekannt, bei dem ein Teilnehmer von einem gemeinsam genutzten Kanal auf einen dedizierten Kanal bzw. von einem dedizierten Kanal auf einen gemeinsam genutzten Kanal wechselt. Ein Wechsel von einem gemeinsam genutzten Kanal auf einen dedizierten Kanal erfolgt, wenn für den dedizierten Kanal "channelization codes" zur Verfügung stehen und wenn gleichzeitig entweder die Differenz zwischen einer Verbindungsqualität einer versorgenden Funkzelle und einer Verbindungsqualität einer zweitbesten Funkzelle kleiner ist als ein vorgegebener Grenzwert oder die Sendeleistung auf dem gemeinsam genutzten Kanal für den Teilnehmer größer ist als ein vorgegebener Grenzwert. Ein Wechsel von einem dedizierten Kanal auf einen gemeinsam genutzten Kanal erfolgt, wenn auf diese Weise ein "channelsation code shortage" erreicht wird, oder wenn sowohl die Verbindungsqualität zu einer versorgenden Funkzelle abzüglich der Verbindungsqualität zu einer zweitbesten Funkzelle größer ist als ein vorgegebener Grenzwert und ein geschätzter Sendeleistungswert für den gemeinsam genutzten Kanal für den Teilnehmer kleiner ist als ein vorgegebener Grenzwert.

In der US 6519461 B1 ist ein Verfahren beschrieben, bei dem eine Teilnehmerverbindung von einer ersten Art von Kommunikationskanal auf eine zweite Art von Kommunikationskanal umgeschaltet wird, falls eine zu übertragende Datenmenge größer ist als ein Grenzwert für die Datenmenge.

Ein ähnliches Verfahren wird auch in der EP 1069790 A2 beschrieben. Hier erfolgt ein Wechsel einer Verbindung von einem gemeinsam genutzten Kanal auf einen dedizierten Kanal oder ein zusätzliches Zuweisen eines dedizierten Kanals, falls eine zu übertragende Datenmenge größer ist als ein Grenzwert der Datenmenge

Der Erfindung liegt daher das Problem zugrunde, ein Verfahren zur Datenübertragung in einem Funkkommunikationssystem anzugeben, bei dem die Zuweisung von Funkressourcen auf einem gemeinsamen Kanal verbessert wird.

Dieses Problem wird gelöst durch ein Verfahren gemäß Anspruch 1. Weitere Ausgestaltungender Erfindung gehen aus den übrigen Ansprüchen hervor.

In dem Verfahren zur Datenübertragung in einem Funkkommunikationssystem ist ein gemeinsamer Kanal vorgesehen, der gleichzeitig mehreren Teilnehmern für eine Datenübertragung zwischen einer Basisstation und einer Teilnehmerstation des jeweiligen Teilnehmers zugewiesen wird. Es werden Messungen bezüglich der Übertragungsqualität auf dem gemeinsamen Kanal durchgeführt, deren Ergebnisse in der Basisstation verfügbar sind. Falls die Messungen ergeben, dass die Übertragungsqualität einem vorgegebenen Kriterium nicht entspricht, übermittelt die Basisstation eine erste Nachricht an eine ihr zugeordnete steuernde Funknetzsteuerung. Die erste Nachricht enthält dabei neben einer Information über die Übertragungsqualität eine Information über die Teilnehmerstationen, für die eine mangelnde Übertragungsqualität gemessen wurde.

Aufgrund der ersten Nachricht kann die steuernde Funknetzsteuerung feststellen, welche Maßnahme zu ergreifen ist, um die Übertragungsqualität zu verbessern. Ergibt die Analyse, dass die Übertragungsqualität für alle Teilnehmerstationen im wesentlichen gleich ist, so liegt es im Rahmen der Erfindung, dass die steuernde Funknetzsteuerung dem gemeinsamen Kanal weitere Ressourcen zuweist.

Ergibt die Analyse dagegen, dass die Übertragungsqualität für die Teilnehmerstationen unterschiedlich und nur für einzelne Teilnehmerstationen schlecht ist, so liegt es im Rahmen der Erfindung, dass die steuernde Funknetzsteuerung daraufhin jeweils mit einer zweiten Nachricht, dienende Funknetzsteuerungen, die den Teilnehmerstationen mit mangelnder Übertragungsqualität zugeordnet sind und die für die Konfiguration des jeweiligen Endgerätes verantwortlich sind, über die mangelnde Übertragungsqualität unterrichtet. Da der steuernden Funknetzsteuerung aufgrund der ersten Nachricht die Information vorliegt, für welche Teilnehmerstationen die mangelnde Übertragungsqualität gemessen wurde, ist die steuernde Funknetzsteuerung in der Lage, die diesen Teilnehmerstationen zugeordneten dienenden Funknetzsteuerungen direkt mittels der zweiten Nachricht darüber zu unterrichten. Die dienenden Funknetzsteuerungen haben dann die Möglichkeit, die Konfiguration der jeweiligen Teilnehmerstation so zu verändern, dass das Problem der Übertragungsqualität gelöst wird. Die zweiten Nachrichten für unterschiedliche Teilnehmerstationen können unterschiedlich lauten.

Ein Vorteil des Verfahrens besteht darin, dass die steuernde Funknetzsteuerung mit der ersten Nachricht konkret mitgeteilt bekommt, für welche Teilnehmerstationen eine mangelnde Übertragungsqualität und damit gegebenenfalls ein Nichteinhalten der Dienstgüteparameter festgestellt wurde. Durch die Übertragung der ersten Nachricht und der zweiten Nachricht werden die Schnittstellen zwischen Basisstation und steuernder Funknetzsteuerung beziehungsweise zwischen steuernder Funknetzsteuerung und dienender Funknetzsteuerung nur in vertretbarem Maß belastet, da keine überflüssigen Informationen übertragen werden. Ein weiterer Vorteil ist darin zu sehen, dass die erste Nachricht mit dem Common measurement übertragen werden kann, das ohnehin benötigt wird.

Es liegt im Rahmen der Erfindung, die Messungen in der Basisstation durchzuführen. Alternativ können die Messungen in den Teilnehmerstationen durchgeführt werden. In diesem Fall werden die Ergebnisse der Messungen an die Basisstation übertragen.

Für den Fall, dass jedem Teilnehmer eine vorgegebene Übertragungsrate zugesagt ist, wird bei der Messung der Übertragungsqualität geprüft, ob die zugesagte Übertragungsrate eingehalten wird.

Für den Fall, dass zu versendenden Dateneinheiten ein Zeitgeber zugeordnet wird, nach dessen Ablauf die zugeordnete Dateneinheit nicht mehr gesendet wird, wird bei der Messung der Übertragungsqualität überprüft, ob die Anzahl der abgelaufenen Zeitgeber bezogen auf die Gesamtzahl der zugeordneten Zeitgeber einen vorgegebenen Schwellwert überschreitet. Damit wird gemessen, ob zugesagte Verzögerungszeiten eingehalten werden.

Vorzugsweise enthält die erste Nachricht eine Benennung der Teilnehmerstationen, für die eine mangelnde Übertragungsqualität gemessen wurde. Zusätzlich kann die erste Nachricht die Anzahl der Teilnehmerstationen enthalten, für die eine mangelnde Übertragungsqualität gemessen wurde.
In verschiedenen Funkkommunikationssystemen wird den Teilnehmerstationen von der steuernden Funknetzsteuerung eine temporäre Kennung zugewiesen. Im UMTS System wird die Kennung als C-RNTI oder Cell Radio Network Temporary Identity bezeichnet. Vorzugsweise wird die temporäre Kennung zur Benennung der Teilnehmerstationen in der ersten Nachricht oder zweiten Nachricht verwendet.

Vorzugsweise leitet die steuernde Funknetzsteuerung aus der ersten Nachricht einen Lösungsvorschlag für eine Änderung der Konfiguration der Teilnehmerstationen ab und übermittelt diesen Lösungsvorschlag mit der zweiten Nachricht an die dienen den Funknetzsteuerungen. Dabei wird ausgenutzt, dass die steuernde Funknetzsteuerung die Verwaltung der funktechnischen Ressourcen für die Basisstation vornimmt. Daher ist es der steuernden Funknetzsteuerung möglich, unter Berücksichtigung aller von der Basisstation versorgten Teilnehmer eine optimale Konfiguration für den einzelnen Teilnehmer zu ermitteln.

Stellt die steuernde Funknetzsteuerung beispielsweise fest, dass durch eine Übergabe der Verbindung zu einer anderen Basisstation oder durch eine Zuweisung eines dedizierten Kanals für eine Teilnehmerstation eine Verbesserung der Gesamtsituation für den gemeinsamen Kanal zu erwarten ist, so liegt es im Rahmen der Erfindung, dass der Lösungsvorschlag einen Hinweis auf eine mögliche Übergabeprozedur zu einer anderen Basisstation oder auf die Zuweisung eines dedizierten Kanals für die betrachtete Teilnehmerstation enthält.

Im Folgenden wird die Erfindung anhand eines Beispiels, das in den Figuren dargestellt ist, näher erläutert.
Figur 1 zeigt einen schematischen Ausschnitt aus einem Funkkommunikationssystem.
Figur 2 zeigt einen Nachrichtenfluss gemäß der Erfindung.

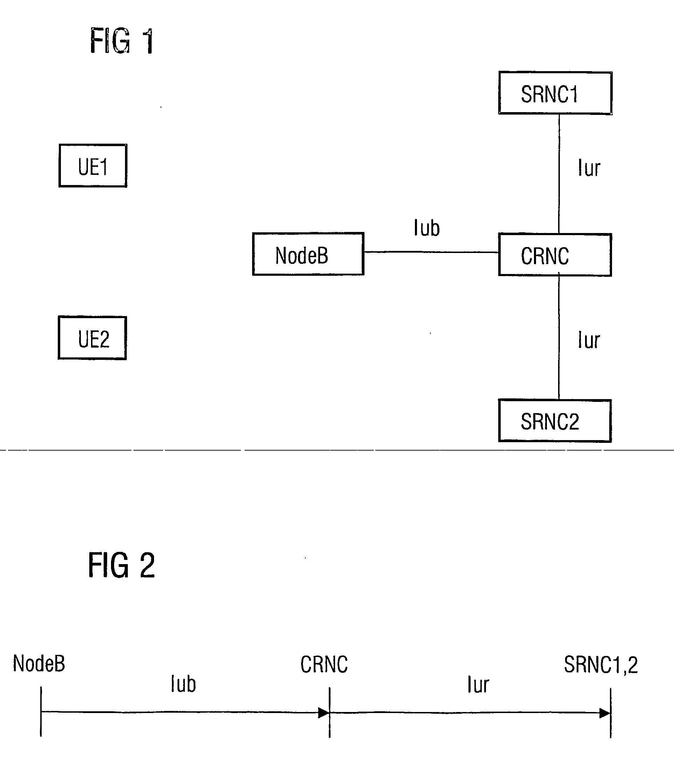

Eine erste Teilnehmerstation UE1 und eine zweite Teilnehmerstation UE2 haben jeweils eine Verbindung zu einer Basisstation Node B aufgebaut (siehe Figur 1). Die Basisstation Node B wird über eine Iub-Schnittstelle von einer steuernden Funknetzsteuerung CRNC gesteuert. Die steuernde Funknetzsteuerung CRNC ist jeweils über eine Iur-Schnittstelle mit einer ersten dienenden Funknetzsteuerung SRNC1 und einer zweiten dienenden Funknetzsteuerung SRNC2 verbunden. Die erste dienende Funknetzsteuerung SRNC1 ist für die Konfiguration der ersten Teilnehmerstation UE1 verantwortlich. Die zweite dienende Funknetzsteuerung SRNC2 ist für die Konfiguration der zweiten Teilnehmerstation UE2 verantwortlich.

In der Basisstation Node B ist ein Hochgeschwindigkeitspaketdatenzugang, vielfach auch High Speed Data Packet Access oder HSDPA, eingerichtet. Dem Hochgeschwindigkeitsdatenzugang ist ein gemeinsamer Kanal zugewiesen. Der gemeinsame Kanal ist gleichzeitig der ersten Teilnehmerstation UE1 und der zweiten Teilnehmerstation UE2, die an dem Hochgeschwindigkeitsdatenzugang teilnehmen, zugewiesen. In der Basisstation Node B ist eine Warteschlange eingerichtet, die die zeitliche Zuweisung von Daten für die erste Teilnehmerstation UE1 und die zweite Teilnehmerstation UE2 auf den gemeinsamen Kanal steuert.

In der Basisstation Node B werden Messungen der erzielten Übertragungsrate und der tatsächlichen Verzögerungszeit bei der Datenübertragung für die erste Teilnehmerstation UE1 und die zweite Teilnehmerstation UE2 durchgeführt. Stellt die Basisstation Node B fest, dass die zugesagte Datenrate und/oder Verzögerungszeit für eine der beiden Teilnehmerstationen UE1,2 nicht erreicht wird, so übermittelt die Basisstation Node B über die Iub-Schnittstelle eine erste Nachricht an die steuernde Funknetzsteuerung CRNC. Alternativ können die Messungen in den Teilnehmerstationen UE1, UE2 durchgeführt werden, wobei das Ergebnis der Messungen von der jeweiligen Teilnehmerstation an die Basisstation übertragen wird.

Die erste Nachricht umfasst eine Information darüber, dass die Übertragungsqualität für mindestens eine der Teilnehmerstationen UE1, UE2 nicht den Anforderungen entspricht und eine Information über die Identität der Teilnehmerstation UE1, UE2, für die eine mangelnde Übertragungsqualität festgestellt wurde. Die Identifikation der Teilnehmerstationen UE1, UE2 erfolgt beispielsweise über eine temporäre Kennung, die von der steuernden Funknetzsteuerung CRNC vergeben wird und für die die Bezeichnung Cell Radio Network Temporary Identity oder C-RNTI gebräuchlich ist.

In der steuernden Funknetzsteuerung CRNC wird die Verteilung der Funkressourcen der Basisstation Node B analysiert und es wird festgestellt, wie die Konfiguration der Teilnehmerstationen UE1, UE2 verändert werden kann, um eine ausreichende Übertragungsqualität zu erzielen. Je nach Ergebnis der Analyse kann die steuernde Funknetzsteuerung CRNC dem gemeinsamen Kanal zusätzliche Ressourcen zuweisen. Ergibt die Analyse, dass die Übertragungsqualität für einzelne Teilnehmerstationen UE1, UE2 schlecht ist und dass dieses durch eine Änderung der Konfiguration geändert werden kann, so wird in der steuernden Funknetzsteuerung CRNC für die erste Teilnehmerstation UE1 eine zweite Nachricht generiert, die der ersten dienenden Funknetzsteuerung SRNC1 übermittelt wird bzw. für die zweite Teilnehmerstation UE2 eine zweite Nachricht generiert, die der zweiten dienenden Funknetzsteuerung SRNC2 übermittelt wird. Mit der zweiten Nachricht wird die dienende Funknetzsteuerung SRNC1 bzw. SRNC2 darüber in Kenntnis gesetzt, dass für die erste bzw. zweite Teilnehmerstation UE1, UE2 keine ausreichende Übertragungsqualität erzielt wird. Ferner enthält die zweite Nachricht einen Vorschlag der steuernden Funknetzsteuerung CRNC, wie die Konfiguration der ersten Teilnehmerstation UE1 bzw. der zweiten Teilnehmerstation UE2 verändert werden kann, um eine zufriedenstellende Übertragungsqualität zu erzielen. Angestoßen durch die zweite Nachricht werden in der ersten dienenden Funknetzsteuerung SRNC1 und der zweiten dienenden Funknetzsteuerung SRNC2 Prozeduren gestartet, mit denen die erste Teilnehmerstation UE1 bzw. die zweite Teilnehmerstation UE2 umkonfiguriert werden.

Die zweite Nachricht, die für die erste Teilnehmerstation UE1 generiert wird und der ersten dienenden Funknetzsteuerung SRNC1 übertragen wird, kann sich von der zweiten Nachricht, die für die zweite Teilnehmerstation UE2 generiert wird und die der zweiten dienenden Funkstation SRNC2 übertragen wird unterscheiden.

Wird beispielsweise nur für die erste Teilnehmerstation UE1 eine mangelnde Übertragungsqualität festgestellt, so wird nur für die erste dienende Funkstation SRNC1 ein zweite Nachricht generiert und übertragen.

Die erste Nachricht wird z.B. als Common Measurement Report über die Iub-Schnittstelle zwischen der Basisstation Node B und der steuernden Funknetzsteuerung CRNC übertragen (siehe Figur 2). Eine Nachricht mit der Bezeichnung Common Measurement Report ist im bestehenden UMTS System vorgesehen, um die steuernde Funknetzsteuerung CRNC darüber zu unterrichten, dass für bestimmte Dienstgüteklassen die Dienstgüteparameter nicht eingehalten werden. Erfindungsgemäß wird vorgeschlagen, diese Common Measurement Report Nachricht im Sinne der ersten Nachricht dadurch zu erweitern, dass sie eine Information zur Identifikation der Teilnehmerstation enthält, für die die Übertragungsqualität nicht ausreichend ist.

Basierend auf der ersten Nachricht wird in der steuernden Funknetzsteuerung CRNC die zweite Nachricht erzeugt, die beispielsweise Deviation Indication genannt werden kann und die über die Iur-Schnittstelle an die dienende erste Funknetzsteuerung und die dienende zweite Funknetzsteuerung übertragen wird. Eine solche zweite Nachricht ist im UMTS System bisher nicht vorgesehen.

## Patentansprüche

1. Verfahren zur Datenübertragung in einem Funkkommunikationssystem,
- bei dem ein gemeinsamer Kanal vorgesehen ist, der gleichzeitig mehreren Teilnehmern für eine Datenübertragung zwischen einer Basisstation (Node B) und einer Teilnehmerstation (UE1, UE2) des jeweiligen Teilnehmers zugewiesen wird,
**dadurch gekennzeichnet, dass**
- Messungen bezüglich der Übertragungsqualität auf dem gemeinsamen Kanal durchgeführt werden, deren Ergebnisse in der Basisstation (Node B) verfügbar sind,
- falls die Messungen ergeben, dass die Übertragungsqualität einem vorgegebenen Kriterium nicht entspricht, die Basisstation (Node B) eine erste Nachricht an eine ihr zugeordnete steuernde Funknetzsteuerung (CRNC) überträgt, wobei die erste Nachricht neben einer Information über die Übertragungsqualität eine Information über Teilnehmerstationen (UE1, UE2) enthält, für die eine mangelnde Übertragungsqualität gemessen wurde.

2. Verfahren nach Anspruch 1,
bei dem die Messungen in der Basisstation (NodeB)durchgeführt werden.

3. Verfahren nach Anspruch 1,
bei dem die Messungen in den Teilnehmerstationen (UE1, UE2) durchgeführt werden und das Ergebnis der Messungen an die Basistation (NodeB) übermittelt wird.

4. Verfahren nach einem der Ansprüche 1 bis 3,
- bei dem die steuernde Funknetzsteuerung (CRNC) jeweils mit einer zweiten Nachricht den Teilnehmerstationen (UE1, UE2) mit mangelnder Übertragungsqualität zugeordnete, dienende Funknetzsteuerungen (SRNC1, SRNC2), die für eine Konfiguration des jeweiligen Endgerätes (UE1, UE2) verantwortlich sind, über die mangelnde Übertragungsqualität unterrichtet.

5. Verfahren nach einem der Ansprüche 1 bis 4,
- bei dem jedem Teilnehmer eine vorgegebene Übertragungsrate zugesagt wird,
- bei dem bei der Messung der Übertragungsqualität überprüft wird, ob die zugesagte Übertragungsrate eingehalten wird.

6. Verfahren nach einem der Ansprüche 1 bis 5,
- bei dem zu versendenden Dateneinheiten ein Zeitgeber zugeordnet wird, nach dessen Ablauf die zugeordnete Dateneinheit nicht mehr gesendet wird,
- bei dem bei der Messung der Übertragungsqualität überprüf wird, ob die Anzahl der abgelaufenen Zeitgeber bezogen auf die Gesamtzahl der zugeordneten Zeitgeber einen vorgegebenen Schwellwert überschreitet.

7. Verfahren nach einem der Ansprüche 1 bis 6,
bei dem die erste Nachricht eine Benennung der Endgeräte (UE1, UE2), für die eine mangelnde Übertragungsqualität gemessen wurde, oder eine Anzahl der Endgeräte (UE1, UE2), für die eine mangelnde Übertragungsqualität gemessen wurde, enthält.

8. Verfahren nach einem der Ansprüche 1 bis 7,
bei dem die zweite Nachricht eine Benennung der Endgeräte (UE1, UE2), für die eine mangelnde Übertragungsqualität gemessen wurde, enthält.

9. Verfahren nach Anspruch 7 oder 8,
- bei dem den Endgeräten von der steuernden Funknetzsteuerung (CRNC) eine temporäre Kennung zugewiesen wird,
- bei dem zur Benennung der Endgeräte (UE1, UE2) die temporäre Kennung verwendet wird.

10. Verfahren nach einem der Ansprüche 1 bis 9,
bei dem die steuernde Funknetzsteuerung (CRNC) aus der ersten Nachricht einen Lösungsvorschlag für eine Änderung der Konfiguration der Endgeräte (UE1, UE2) zum Erzielen einer zufriedenstellenden Übertragungsqualität ableitet und diesen Lösungsvorschlag mit der zweiten Nachricht übermittelt.

11. Verfahren nach Anspruch 10,
bei dem der Lösungsvorschlag einen Hinweis auf eine mögliche Übergabeprozedur zu einer anderen Basisstation oder die Zuweisung eines dedizierten Kanals für das Endgerät (UE1, UE2) enthält.

## Claims

1. Method for data transmission in a radio communication system,
- in which a shared channel is provided and is assigned at the same time to a plurality of subscribers for data transmission between a base station (Node B) and a subscriber station (UE1, UE2) of the respective subscriber,
**characterized in that**
- measurements are taken relating to the transmission quality on the shared channel, and the results of these measurements are available in the base station (Node B),
- if the measurements show that the transmission quality does not satisfy a predetermined criterion, the base station (Node B) transmits a first message to a controlling radio network controller (CRNC) associated with it, with the first message containing not only information about the transmission quality but also information about subscriber stations (UE1, UE2) for which a poor transmission quality has been measured.

2. Method according to Claim 1,
in which the measurements are taken in the base station (Node B).

3. Method according to Claim 1,
in which the measurements are taken in the subscriber stations (UE1, UE2) and the result of the measurements is transmitted to the base station (Node B).

4. Method according to one of Claims 1 to 3,
- in which the controlling radio network controller (CRNC) in each case uses a second message to inform the serving radio network controllers (SRNC1, SRNC2) which are associated with the subscriber stations (UE1, UE2) with poor transmission quality and are responsible for configuration of the respective terminal (UE1, UE2), about the poor transmission quality.

5. Method according to one of Claims 1 to 4,
- in which each subscriber is promised a predetermined transmission rate,
- in which, when the transmission quality is being measured, a check is carried out to determine whether the promised transmission rate is being maintained.

6. Method according to one of Claims 1 to 5,
- in which a timer is allocated to data units to be transmitted and, after this timer has timed out, the associated data unit is no longer transmitted,
- in which, while the transmission quality is being measured, a check is carried out to determine whether the number of timers which have timed out exceeds a predetermined threshold value with respect to the total number of associated timers.

7. Method according to one of Claims 1 to 6,
in which the first message contains an identification of the terminals (UE1, UE2) for which poor transmission quality has been mentioned, or a number of terminals (UE1, UE2) for which poor transmission quality has been measured.

8. Method according to one of Claims 1 to 7,
in which the second message contains an identification of the terminal (UE1, UE2) for which poor transmission quality has been measured.

9. Method according to Claim 7 or 8,
- in which a temporary tag is assigned to the terminals by the controlling radio network controller (CRNC),
- in which the temporary tag is used to identify the terminals (UE1, UE2).

10. Method according to one of Claims 1 to 9,
in which the controlling radio network controller (CRNC) derives from the first message a solution proposal for a change in the configuration of the terminal (UE1, UE2) in order to achieve a satisfactory transmission quality, and transmits this solution proposal with the second message.

11. Method according to Claim 10,
in which the solution proposal contains information relating to a possible handover procedure to another base station, or the assignment of a dedicated channel for that terminal (UE1, UE2).

## Revendications

1. Procédé de transmission de données dans un système de radiocommunication,
- dans lequel on prévoit un canal commun qui est attribué simultanément à plusieurs abonnés pour une transmission de données entre une station de base (Node B) et une station d'abonné (UE1, UE2) de l'abonné respectif,
**caractérisé en ce que**
- des mesures concernant la qualité de transmission sur le canal commun sont exécutées, mesures dont les résultats sont disponibles dans la station de base (Node B),
- dans le cas où les mesures révèlent que la qualité de transmission ne correspond pas à un critère prédéfini, la station de base (Node B) transmet un premier message à un contrôleur de réseau radio à fonction de contrôle (CRNC) qui lui est associé, le premier message contenant, outre une information sur la qualité de transmission, une information sur les stations d'abonnés (UE1, UE2) pour lesquelles une qualité de transmission insuffisante a été mesurée.

2. Procédé selon la revendication 1,
dans lequel les mesures sont exécutées dans la station de base (Node B).

3. Procédé selon la revendication 1,
dans lequel les mesures sont exécutées dans les stations d'abonné (UE1, UE2) et le résultat des mesures est transmis à la station de base (Node B).

4. Procédé selon l'une des revendications 1 à 3,
- dans lequel le contrôleur de réseau radio à fonction de contrôle (CRNC) informe à chaque fois de la qualité de la transmission insuffisante, grâce à un second message, des contrôleurs de réseau radio de service (SRNC1, SRNC2) associés aux stations d'abonné (UE1, UE2) présentant une qualité de transmission insuffisante et qui sont responsables d'une configuration du terminal respectif (UE1, UE2).

5. Procédé selon l'une des revendications 1 à 4,
- dans lequel un débit de transmission prédéfini est convenu avec chaque abonné,
- dans lequel on vérifie, lors de la mesure de la qualité de transmission, si le débit de transmission convenu est respecté.

6. Procédé selon l'une des revendications 1 à 5,
- dans lequel une horloge est associée à des unités de données à envoyer et l'unité de données associée n'est plus envoyée après écoulement du temps de l'horloge,
- dans lequel on vérifie, lors de la mesure de la qualité de transmission, si le nombre d'horloges dont le temps est écoulé par rapport au nombre total des horloges associées est supérieur à une valeur seuil prédéfinie.

7. Procédé selon l'une des revendications 1 à 6,
dans lequel le premier message contient une désignation des terminaux (UE1, UE2) pour lesquels une qualité de transmission insuffisante a été mesurée ou un nombre des terminaux (UE1, UE2) pour lesquels la qualité de transmission insuffisante a été mesurée.

8. Procédé selon l'une des revendications 1 à 7,
dans lequel le second message contient une désignation des terminaux (UE1, UE2) pour lesquels une qualité de transmission insuffisante a été mesurée.

9. Procédé selon la revendication 7 ou 8,
- dans lequel un identifiant temporaire est attribué aux terminaux par le contrôleur de réseau radio à fonction de contrôle (CRNC),
- dans lequel l'identifiant temporaire est utilisé pour désigner les terminaux (UE1, UE2).

10. Procédé selon l'une des revendications 1 à 9,
dans lequel le contrôleur de réseau radio à fonction de contrôle (CRNC) déduit du premier message une proposition de solution pour une modification de la configuration des terminaux (UE1, UE2) en vue d'obtenir une qualité de transmission satisfaisante et transmet cette proposition de solution avec le second message.

11. Procédé selon la revendication 10,
dans lequel la proposition de solution contient une indication sur une procédure de transfert possible vers une autre station de base ou l'affectation d'un canal dédié pour le terminal (UE1, UE2).
